# EUROPEAN PATENT APPLICATION

(11) **EP 4 718 257 A2**
(43) Date of publication of application: **01.04.2026**
(21) Application number: 25204132.2
(22) Date of filing: 23.09.2025
(51) Int. Cl.: G06F 11/07, G06F 11/20, G06F 11/30

(54) **METHOD AND APPARATUS FOR IDENTIFYING REPLACEMENT RESOURCES TO PERFORM DYNAMIC RECONFIGURATION IN EMBEDDED SYSTEMS IN CASE OF FAILURE**

(30) Priority: 27.09.2024 IN 202441073052
(71) Applicant: NXP USA, Inc., Austin, TX 78735 (US)
(72) Inventor: Kumar, Ashish, 5656AG Eindhoven (NL); Klug-Mocanu, Carmen, 5656AG Eindhoven (NL); Galtie, Franck, 5656AG Eindhoven (NL)
(74) Representative: Miles, John Richard

(57) **Abstract**

A method, system, apparatus, and architecture are provided for reacting to resource faults by deploying safety management unit (SMU) instances at a plurality of functional components, where each SMU instance is program code configured to monitor a first set of one or more resources assigned to run a first application; detect a fault at the first set of one or more resources; identify a second set of one or more resources for reallocation to the first application using a ranked listing of candidate resource sets, where each candidate resource set is capable of running the first application; and assign the second set of one or more resources to run the first application, where the ranked listing of candidate resource sets is dynamically updated based on runtime performance and health measures of resources in the candidate resource set.

## Description

### BACKGROUND OF THE INVENTION

### Field of the Invention

The present disclosure is directed in general to industrial automotive safety systems in any field, such as automotive, aeronautics, health care, and the like. In one aspect, the present disclosure relates to methods and systems for fault management in system-on-chips (SoCs).

### Description of the Related Art

Increasing levels of system integration have resulted in more and more processor cores and resources being bundled on a single chip. These processor cores have multiple applications being executed at the same time. With such system designs where multiple applications are integrated on the same chip and working concurrently, there is an increase in the number of faults in the chip. Fault handling challenges only increase with system architectures which combine multiple system-on-chip (SoC) devices into a single networked platform. For example, future vehicle architectures will need to accommodate on single platform complex functions (e.g., serviced oriented vehicle smart capabilities and highly personalized functions, extended car connectivity features, etc.) with autonomous driving requirements where safety, security and availability play a central role.

To achieve fault-free operation, it is mandatory to detect and recover from a fault within a defined fault handling time interval. Typically, a fault collection and reaction system is included on the SoC device to categorize faults and generate appropriate reactions. Existing fault collection and reaction system architectures use a centralized fault collection application to collect and react to faults, which results in a high severity response for each fault irrespective of the application that resulted in the fault. Moreover, the existing fault collection and reaction systems rely on a central core and software to handle faults from all applications. This increases fault handling time and instability in the chip and reduces system availability for other operations. Such centralized fault handling architectures have several disadvantages for the new SoC trends, including loss of fault granularity when complex fault routing is solved by fault aggregation, limited scalability to system-of-systems solutions, and robustness with respect to faults which requires thorough testing. Other existing fault collection and reaction systems have proposed a layered architecture with different levels of self-awareness, decision making and a concept of handling failures in-context, but such solutions typically provide fail operational protection of faulty hardware unit by including a fully redundant or backup replacement hardware unit, or otherwise provide solutions for entering a fails state upon detection of a failure.

As seen from the foregoing, the existing fault collection and handling systems are extremely difficult at a practical level by virtue of the challenges with providing fault handling on complex SoC and system of system designs which meet the applicable performance, design, complexity and cost constraints.

### BRIEF DESCRIPTION OF THE DRAWINGS

The present invention may be understood, and its numerous objects, features and advantages obtained, when the following detailed description of a preferred embodiment is considered in conjunction with the following drawings.
Figure 1 depicts a simplified plan view of a vehicle which employs a zonal controller architecture with multiple zonal gateways connected to a central controller to ensure that various sensors, systems, controllers, and communications systems are performing safely and reliably.
Figure 2 diagrammatically depicts a database architecture for a fail-operational system which determines the availability replacement resources for a failing function to dynamically perform a safe reallocation or reconfiguration at runtime in accordance with selected embodiments of the present disclosure.
Figure 3 illustrates the operation of a fail-operational system wherein a plurality of processes uses a ranking database to identify, for each process, a default hardware partition set and one or more ranked replacement hardware partition sets for reconfiguring each process in the event of a failure.
Figure 4 depicts a simplified block diagram of a functional component having a safety management unit for dynamically reconfiguring resources independently at each hierarchical level in the event of a hardware/software resource failure.
Figure 5 depicts a schematic block diagram of a hierarchical fault collection, monitoring, and handling system having a plurality of functional components connected in an escalation tree configuration for reallocating resources in accordance with selected embodiments of the present disclosure.
Figure 6 depicts a schematic block diagram of a diagnostic and performance controller for populating resource databases in accordance with selected embodiments of the present disclosure.

### DETAILED DESCRIPTION

A fault handling system, apparatus, method, and program code are described for monitoring, analyzing, and reacting to hardware faults by dynamically reallocating resources to safety critical tasks using a centralized brain controlled architecture combined with a layered approach of ranking and using available replacement resource sets for each application which is using a faulty hardware resource set. In selected embodiments, the dynamic reconfiguration of resource sets at each application can be controlled and driven by a fault collection/handling unit which is configured to provide a ranking of available replacement resource sets for the application at the operating state with minimal latency, thereby achieving a fail-operational operation. By configuring each fault collection/handling unit to provide details on available resources and their health and performance data, each available resource can be ranked for dynamic reconfiguration of resources at the lowest possible granularity if failure happens in the current context. In addition, the implementation of multiple configured fault collection/handling units in a layered architecture enables safe dynamic decision-making for reconfiguring or reallocating critical functionality in case of failure. In addition, the layered architecture enables fault handling to be escalated to the next hierarchy level if dynamic resource reallocation cannot be done at the existing hierarchy level. In selected embodiments, the fault collection/handling units are connected with a plurality daisy-chain configurations arranged in an escalation tree for comprehensive fault collection, handling, and escalation. By using daisy-chained configurations of a single fault collection/handling unit in arbitrary topologies of SoC subsystems, fault collection and monitoring is enabled from distributed components. And by connecting the daisy-chained fault collection/handling unit in an escalation tree configuration, fault collection, monitoring, and escalation is enabled in a hierarchical organization of SoC system hardware resources. The arbitrary hierarchy depth enables efficient safe-stating while keeping the unaffected applications running on the SoC system. The disclosed deployment topologies scale well to the future complex SoC architectures supporting both distributed and hierarchical organization of SoC system hardware resources.

In selected embodiments, the disclosed fault handling system provides fail-operational fault handling in SoCs implementing system of systems while keeping available as much of the SoC as possible by reconfiguring an application/process to use reallocated hardware partition resources when a fault is detected for the default resources used by the application/process, thereby ensuring functional safety for the SoC while reducing the safe-stating or shutting down of the application/process.

At the core of the disclosed fault handling system is a safety management unit (SMU) which is a defined software prototype unit which administers the system to achieve fail-operational capabilities by providing both the framework and the conditions to realize a deterministic and controlled dynamic resource reallocation during application run time. Each SMU includes a State Management, a Resource Management and the Resource Database, and is accountable for controlling SW components (SWC) execution on their assigned HW resources at the respective level. To this end, each SMU is connected to receive fault inputs (for collecting faults) and an overflow input from a downstream SMU (for further connectivity). In addition, each SMU generates escalation fault outputs, including an overflow output and local control outputs that can be configured as needed. As disclosed herein, SMUs can be connected in different topologies to implement fault collection, handling, and escalation. Fault collection in a subsystem can be achieved by a single SMU or by multiple SMUs connected in a daisy chain. Fault escalation can be achieved by forming an escalation tree from SMUs. With this hierarchy, the fault is isolated at the lowest possible level and try to reconfigure at respective levels to ensure availability without impacting other parts of the system. Finally, the proposed SMU implementation and its deployment supports SoC architectures in the form of system of systems. The fault collection and escalation supports SoCs with blocks of IPs called subsystems and hosting several virtual ECUs. The fault escalation enables grouping of virtual ECUs at multiple levels and therefore scales up well to future SoC/ECU architectures hosting multiple instances of nowadays SOCs and virtual electronic control units (vECU) logical grouping into a hierarchical structure.

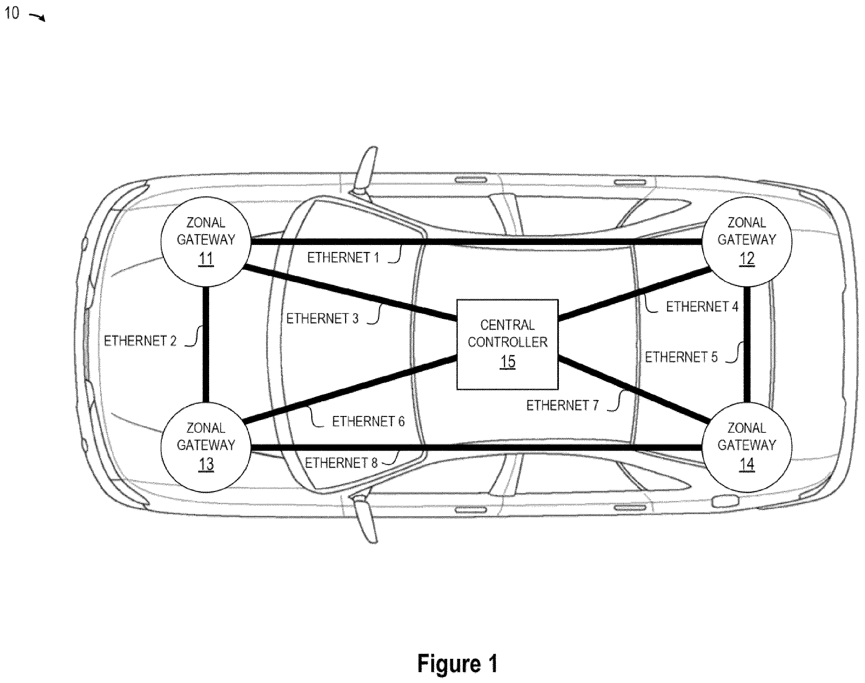

To provide a contextual understanding of the disclosed fault handling system, apparatus, method, and program code, reference is now made to Figure 1 which depicts a simplified plan view of a vehicle 10 which employs a zonal controller architecture with multiple zonal gateways 11-14 connected to a central controller 15 (a.k.a., the brain) to ensure that various sensors, systems, controllers, and communications systems are performing safely and reliably. Each zonal gateway or controller (e.g., 11) is a vehicle node that segments the electrical and electronic architecture and serves as a hub for all of the power distribution and data connection requirements for devices - the various sensors, peripherals and actuators - within a physical section or zone of the vehicle 10. In addition, the central controller 15 may be implemented as a vehicle server that optimizes the computational resources by consolidating the number of physical ECUs, reducing H/W components, wiring results in less weight and overall cost reduction. Each zonal gateway 11-14 is connected to the central computing cluster 15 at the heart of the vehicle 10 using a main backbone interface, such as an automotive harness or automotive Ethernet 1-8. As a result, this inter-zonal communication can take place over a small, high-speed networking cable that greatly reduces both the quantity and size of the cables that must be installed around the vehicle.

In the automotive sector, SoC designs increasingly host multiple control applications that were originally developed as independent Electronic Control Units (ECUs). Automotive vendors tend to implement zonal architecture in cars because it saves costs and weight. A zonal architecture requires control functions to be implemented close to the physical function locations. A zonal controller therefore hosts several ECU functions that were previously controlled from independent ECUs.

In order to reduce the likelihood of a harm to humans in the case of a failure, automotive ECUs are subjected to functional safety standards, such as ISO 26262 [ISO11], [ISO18] which is the international functional safety standard for the development of electrical and electronic systems in road vehicles. Under such existing standards, an ECU that experiences a fault will be brought gracefully to a safe state. However, in accordance with the present disclosure, the objective is to make the ECU fail-operational by finding the suitable replacement resource(s) to ensure the critical functions still work on failure. This goal applies also when a zonal controller hosts several ECUs. Both individual ECU availability and also ECU fail-operational independence shall be achieved in order to achieve high ECU availability and function. Both fault detection and fault reaction shall be designed to achieve this goal.

Hosting several virtual ECUs (vECUs) on a single SoC (and thus on a single physical ECU) poses additional challenges for fault handling. For example, the ISO 26262 standard requires that every ECU reduces the occurrence of dangerous failures to an acceptable level. Faults can be detected by both hardware and software detection mechanisms. The scope of fault effects can be different and thus different need to be the scopes of the respective reactions. However, in accordance with the present disclosure, the layered architecture helps address this challenge by including an SMU instance within each vECU.

In addition, the design trends for future SoCs is to host complex system of virtual ECUs -- a system of systems. As the number of control functions grows and the dependency on those functions increases with new vehicle designs, the demand for higher availability of those functions increases, even in the presence of faults. This will require higher independence of functions and cascading hierarchy of function groups that ensure only a local or a partial loss of functionality in the case of a failure.

In the zonal controller architecture depicted in Figure 1, the central controller 15 serves as central "brain" controller which provides a Vehicle Function Management role to control the vehicle Software Platform functions and the vehicle Hardware Platform functions. The architecture enables a software defined vehicle (SDV) architecture, where a central car computer manages every function from fuel efficiency to sensors, safety, security, infotainment, OTA, diagnostics, and more. As will be appreciated, the zonal controller architecture may have different hierarchical layers, each one with its own decision and control unit, supervised by the control unit of the layer above.

The vehicle Software Platform is an abstract container for all the vehicle functions (application/processes/tasks) and their components assigned by the car manufacturer to the physical vehicle to be supported (e.g., ADAS Applications, Vehicle Dynamics, Body Mechatronics, Chassis mechatronics, Infotainment, Car Connectivity/ V2X). The vehicle Hardware Platform is an abstract container for all hardware components available, controlled and allocatable by the Vehicle Function Management to the SW Platform components (e.g., High Performance MPUs, Data Storage Components, Sensors, Actuators, Zonal Module Controllers, Power Supplies, Communication Networks for ensuring data transfer between the HW Platform components).

At the central controller 15, the Vehicle Function Management role is the top control unit in the zonal controller architecture. As such, the Vehicle Function Management is aware of the SW Platform list ( e.g., list of functions, applications, processes, tasks) and their dependencies (if any) which has to be assigned to the HW resources and scheduled for execution, including the proper data flow and data exchange between different software components. In addition, the Vehicle Function Management is aware of the HW Platform components list (e.g., HW resources) and corresponding component states, including whether the HW component is allocated to a SW component. In addition, the Vehicle Function Management assigns applications to the necessary Hardware resources, and schedules them for execution based on the vehicle state to ensure the proper data flow. In addition, the Vehicle Function Management controls and monitors the execution of the vehicle functions/application (SW Platform) on the available HW resources (HW platform). In addition, the Vehicle Function Management is aware of the applications execution status (running, scheduled, canceled/de-initialized, etc.), including the HW resources on which each application is assigned for execution. In addition, the Vehicle Function Management is aware of HW platform components and HW partitions state.

As will be appreciated, a complex function may require a controlled data flow from the zonal gateways 11-14, through the communication network (such as the automotive harness or automotive Ethernet 1-8) to the central controller 15, and back. Failure of the complex function may be caused by a failure at the central controller 15 (i.e., "Type 1"), or a communication network failure (i.e., "Type 2"), or a failure at one of the zonal gateways 11-14 (i.e., "Type 3"). Depending on failure type, (e.g., 1, 2 or 3) and on the existing and available resources, an attempt to reallocate the function and replace the failing subsystem may be initiated by the control unit for the failing subsystem. For a Type 1 processing-related failure, an attempt to reallocate within the same SoC or between the SoCs may be initiated. Depending on the application for a Type 2 communication network failure, a reallocation of the vehicle communication network may be also required to redirect the transmitter/receiver data path. In case of a Type 3 zonal gateway failure, the problem of reallocation is complex since sensors and actuators are typically physically connected to a local zonal gateway to reduce cabling overhead, making it difficult to connect a sensor/actuator to an alternative zonal gateway. As a result, there are limited options for searching and finding an alternative zonal gateway HW resource set.

As seen from the foregoing, there are conflicts and tradeoffs with different solutions for providing dynamic reconfiguration of real-time automotive embedded systems in a fail-operational context. To address the foregoing deficiencies and others known to those skilled in the art, there is disclosed herein a fault handling system, apparatus, method, and program code are described for monitoring, analyzing, and reacting to hardware faults by dynamically reconfiguring or reallocating resources to safety critical tasks using a multi-layer hierarchical connection of safety management units which control and drive the reconfiguration/reallocation of system resources by dynamically generating a ranking of available replacement resource sets for each application for use with replacing the functionality of a faulty hardware resource set.

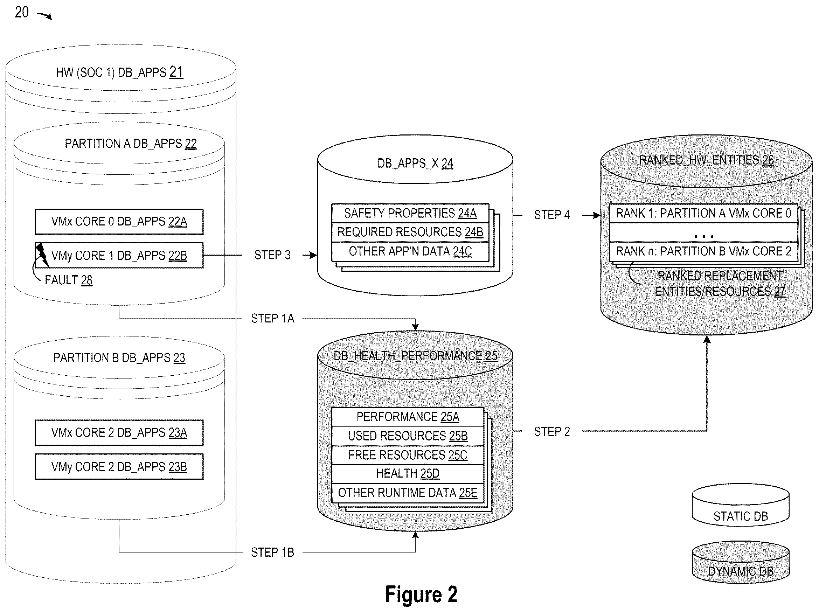

To provide additional details for an improved understanding of selected embodiments of the present disclosure, reference is now made to Figure 2 which diagrammatically depicts a database architecture for a fail-operational system 20 which determines the availability replacement resources for a failing function to dynamically perform a safe reallocation or reconfiguration of system hardware resources at runtime. As depicted, the fail-operational system 20 includes a static hardware (SoC 1) database 21, a static application database 24, and a dynamic health performance database 25 which are connected and configured to build the dynamic ranking database 26 which stores, for each application, a ranked listing of replacement entities or resources 27 to be used by the application in the event of a detected hardware fault 28 at the hardware resources being used by the application.

In particular, the static hardware database 21 includes a plurality of individual hardware partitions (e.g., Partition A 22, Partition B 23, etc.). Within each partition 22,23, the static hardware database 21 specifies which software applications can run on which hardware resources in isolation from one another. For example, Partition A 22 specifies a first listing 22A for a first software application (VMx) running on a first hardware resource (Core 0), and also specifies a second listing 22B for a second software application (VMy) running on a second hardware resource (Core 1). In similar fashion, Partition B 23 specifies a first listing 23A for a first software application (VMx) running on a first hardware resource (Core 2), and also specifies a second listing 23B for a second software application (VMy) running on the same hardware resource (Core 2).

In addition, the static application database 24 includes, for each software application listed in the static hardware database 21, a fixed listing of the safety properties 24A, required resources 24B, and other application data 24C. For example, the listing of safety properties 24A may specify the automotive/industrial safety integrity level (e.g., ASIL A/B/C/D or SIL 1/2/3/4) or a quality management (QM) level (e.g., SIL 1, 2, 3, 4). In cases where a QM level safety property indicates that an application has low criticality and is not safety relevant, the assigned hardware resources for that application can be reallocated to an application with higher safety property (e.g., ASIL D). In similar fashion, an application with a relatively low ASIL safety property (e.g., ASIL A) may have its assigned hardware resources reallocated to an application with higher safety property (e.g., ASIL D). In addition, the listing of required resources 24B may specify the resources required for the application to start at bootup. In addition, the listing of other application data 24C may identify other relevant application properties, such as physical connection requirements between nodes, a functionality mode for the application (e.g., a high mode or a medium mode or a low mode), or other indications of whether the assigned hardware resources can be reallocated. In cases where a functionality mode indicates that an application has relatively low safety criticality (e.g., a parking mode), the assigned hardware resources for that application can be reallocated to the critical application, but if the functionality mode indicates that an application has relatively high safety criticality (e.g., a driving mode), then the assigned hardware resources for that application should not be reallocated to a similar critical application which reported the failure.

In addition, the dynamic health performance database 25 includes, for each hardware partition 22, 23, a listing of the performance data 25A, used resources 25B, free resources 25C, health data 25D, and other runtime data 25E. For example, the dynamic health performance database 25 may be updated periodically during runtime to collect, collate, and store performance data 25A, health data 25D, and other runtime data 25E for the hardware or software resources being used by the software applications in each partition. In addition, the used resources 25B may specify the resources currently being used by the software applications in each partition, and the free resources 25C may specify the resources that are currently not being used by the software applications in each partition. In addition, the health data 25D may specify the current health status of the resources being used by the software applications in each partition in terms of whether they are working as expected. In addition, the other runtime data 25E may specify the current context, mode, etc.

In addition, the dynamic ranking database 26 includes, for each application, a ranked listing of entities or resources 27 to be used by the application in the event of a detected hardware fault 28 at the hardware resources being used by the application. For example, the dynamic ranking database 26 may be updated periodically during runtime to rank, in descending order of priority, the available replacement hardware entities or resources that can be used by each software application in the event that a fault, like a hardware fault 28, is reported for the software application. As disclosed herein, based on the static application database 24 and dynamic health performance database 25 level of information, the ranked listing of replacement entities or resources 27 may identify replacement resources in a different hardware partition (e.g., Partition B) than where the hardware fault is reported, but may also identify existing or new free replacement resources in the same hardware partition (e.g., Partition A) where the hardware fault is reported.

In operation, the fail-operational system 20 performs an initial step (Step 1A, Step 1B) during runtime to collect and collate from each partition, the performance and health data, along with a listing of used and free resources, for the hardware resources being used by the software applications. For example, Step 1A shows a runtime operation where information is collected from Partition A 22 which specifies the used and available resources, along with the health, performance indicators, current context/state, etc., that is stored in the dynamic health performance database 25. In addition, Step 1B shows a runtime operation where information is collected from Partition B 23 (e.g., used and available resources, health, performance indicators, current context/state, etc.) and stored in the dynamic health performance database 25. In this way, information may be collected from each hierarchy level of the fail-operational system 20 and periodically updated during runtime to track the current operational status and requirements of the hardware resources assigned to each software application.

Based on the listing of performance data 25A, used resources 25B, free resources 25C, health data 25D, and other runtime data 25E for each partition that is collected at the dynamic health performance database 25, a ranking process (Step 2) may be performed by the safety management unit to calculate, verify, and update the ranking of the replacement entities or resources 27 stored in the dynamic ranking database 26, where each entity identifies a hardware partition where reallocation may be performed with pointers to the current/available resources required for the corresponding software application/process. As disclosed herein, the ranking of the replacement entities or resources 27 is periodically recalculated to continuously update the listing of "next best" resources that can be used by a reconfigurable software application in the event a failure reported. In addition or in the alternative, the ranking process (Step 2) may be performed to recalculate or re-sort the ranking of the replacement entities or resources 27 any time a change in state is detected (e.g., changing from "driving" to "parking" or "idling"). In this way, the safety management unit may continuously update the dynamic ranking database 26 based on current information. In the example entity/resource ranking 27 shown in Figure 2, the replacement resource having the highest ranked (Rank 1) for a software application VMy running on Core 1 in Partition A is "Partition A, VMx, Core 0," and there may be additional lower ranking replacement resources for the software application, including the replacement resource "Partition B, VMx, Core 2" having a lower ranking (Rank n).

At whatever point the fail-operational system 20 detects a fault, the affected application(s) will access the static application database 24 (Step 3) to gather the current minimum set of configuration requirements for the affected application(s) to run. For example, if a failure 28 is reported for the hardware resources being used by a software application (e.g., VMy running on Core 1), the safety management unit may access the static application database 24 to identify the minimum application configuration requirements to allow dynamic reconfiguration with replacement resources.

Based on the application configuration requirements, the fail-operational system 20 selects the best-ranked entity to reconfigure/reallocate the affected software application (Step 4). For example, if a failure 28 is reported for the hardware resources being used by a software application (e.g., VMy running on Core 1), the safety management unit may access the ranking of the replacement entities or resources 27 to identify the best-ranked replacement resource (e.g., Partition A, VMx, Core 0) meeting the application configuration requirements to replace the faulty resource (e.g., Partition A, VMx, Core 1).

At each hierarchical level of a vehicle, a safety management unit may be implemented in software at each functional component in the hierarchical level for purposes of reallocating hardware entities under control of the safety management unit. In an example embodiment, the hierarchical breakdown of hardware entities may proceed from highest to lowest (e.g., Vehicle->ECU->SoC->HW Partition->Core->VM). In similar fashion, the hierarchical breakdown of software entities may proceed from highest to lowest (e.g., Vehicle Function->Application->Process->Tasks). At each software entity, the safety management unit is configured to perform fault management and local recovery at the hierarchy level of that software entity, or otherwise escalate the fault handling to the safety management unit in the next (higher) hierarchy level. For decision-making in case of fault detection, the safety management unit in the respective hierarchy would need a statically-defined list of software entities which can be considered for dynamic reconfiguration. In addition, the safety management unit would need a statically-defined list of associated properties of each software entity (e.g., current context/state of the SW entity, next feasible context/state, resources required, safety criticality, etc.). The safety management unit would also need a statically-defined list of feasible hardware entities on which the software entity can run based on rank (though the ranking will be determined dynamically at runtime). In addition, the safety management unit would need a dynamically updated list of currently used resources and available resources with corresponding health information which is provided by the software entity at runtime. The safety management unit would also need a dynamically updated list of performance indicators (e.g., CPU load, timing consumption, power consumption, etc.) which is provided by the software entity at runtime. For the next (higher) level in hierarchy, the same set of information of the lower hierarchy will be collated and made available. In this way, the software management unit at the highest hierarchical level (e.g., Vehicle) can access the superset of the database for decision-making, but as it goes to the lowest hierarchy, only the database pertaining to that level can be accessed.

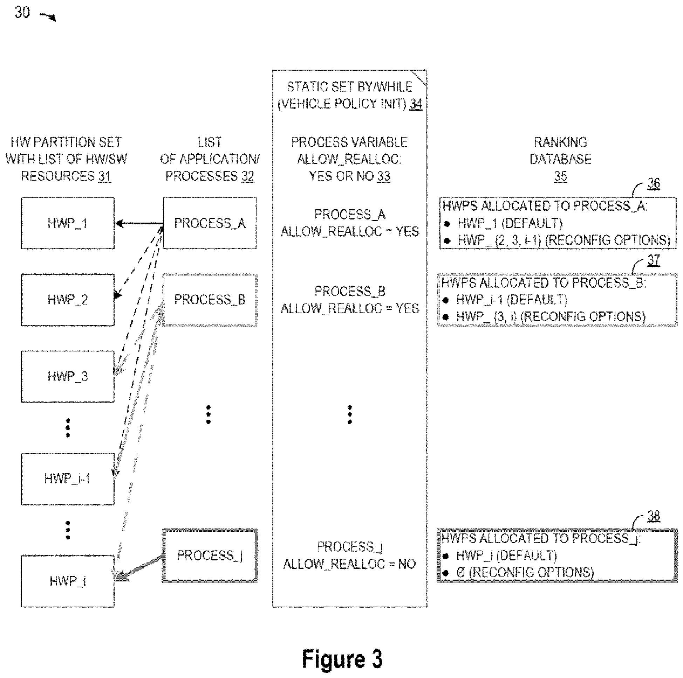

To provide additional details for an improved understanding of selected embodiments of the present disclosure, reference is now made to Figure 3 which is a diagrammatic illustration of the operation of a fail-operational system 30 wherein a plurality of processes uses a ranking database to identify, for each process, a default hardware partition set and one or more ranked replacement hardware partition sets for reconfiguring each process in the event of a failure.

As depicted, a plurality of hardware partitions sets 31 is shown (HWP_1, HWP_2, HWP_3, ... HWP_i-1, HWP_i), each of which includes a corresponding list of hardware and software resources use for the respective partition set. In addition, a plurality of applications or processes 32 is shown (Process_A, Process_B , ... Process_j), each of which has an assigned default hardware partition, as indicated by the solid lines connecting each application/process to a corresponding hardware partition set. In the depicted example, the hardware partition set HWP_1 is assigned as the default setting for Process_A, the hardware partition set HWP_i-1 is assigned as the default setting for Process_B, and the hardware partition set HWP_i is assigned as the default setting for Process_j.

In addition, a plurality of process variables 33 is shown for each of the application/processes to specify whether the corresponding application/process is enabled for resource allocation, where each process variable may have a first value (e.g., ALLOW_REALLOC=YES) to indicate that reallocation is allowed for the application/process, or may have a second value (e.g., ALLOW_REALLOC=NO) to indicate that reallocation is not allowed for the application/process. As indicated with the program code box 34, the process variable (ALLOW _REALLOC) for each application/process which may be statically set by the vehicle policy or during initialization.

As shown with the depicted ranking database excerpts 35, the ranking database holds the descending list of possible hardware partition sets (HWPS) from highest rank to lowest rank that can be reallocated or reconfigured for each application/process in the event of failure. The ranking order can be based on multiple factors like functionality (fully functional to degraded mode), safety integrity (high to low), performance (high to low), partition load (low to high), reconfiguration latency (low to high), etc. In selected embodiments, the safety management unit may be configured to update the ranking database 35 based on runtime inputs, such as the current health of the resources, the current performance (e.g., load, temperature, etc.), one or more external inputs (e.g., system state or information from higher hierarchical level), latency time to perform reconfiguration of the desired set, and the like.

In the depicted example, the ranking database excerpt 36 specifies the default hardware partition set (HP_1) for Process_A, and also specifies a ranked set of replacement or reconfiguration options (HW_2, HW_3, HW_i-1) for Process_A as indicated with the dashed lines connected to Process_A. In similar fashion, the ranking database excerpt 37 specifies the default hardware partition set (HP_1-1) for Process_B, and also specifies a ranked set of replacement or reconfiguration options (HW_3, HW_i) for Process_B as indicated with the dashed lines connected to Process_B. Similarly, the ranking database excerpt 38 specifies the default hardware partition set (HP_i) for Process_j, but there is no ranked set of replacement or reconfiguration options since the process variable indicates that reallocation is not allowed (e.g., ALLOW_REALLOC=NO).

As disclosed herein, the ranking of hardware partition sets is done based on processes running at the same hierarchical level. Thus, if Process_j has a failure, there is no reconfiguration allowed by the safety management unit at that level because there are no allowable reconfiguration hardware partition sets at that level. However, if there is a failure detected for Process_A, then the ranking database excerpt 36 specifies that the preferred reconfiguration hardware partition set option is HWP_2. At a different instance of time, the ranking of reconfiguration options for Process_A could be a different set based on the factors explained above.

As will be appreciated, the fail-operational system 30 may include a static database and /or dynamic database. If there is no reallocation enabled for an application/process (e.g., ALLOW _REALLOC=NO), then there would be no dynamic database for that application/process, and only the initial static configuration exists. In this case, if failure happens for the application/process, no dynamic reconfiguration would happen and process may be stopped/move to safe state.

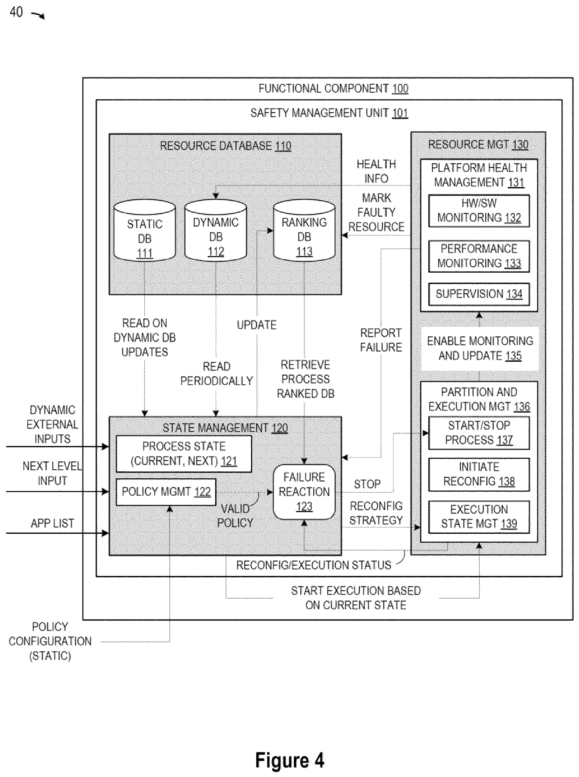

To provide additional details for an improved understanding of selected embodiments of the present disclosure, reference is now made to Figure 4 which depicts a simplified block diagram 40 of a functional component 100 wherein a safety management unit 101 is provided for dynamically reconfiguring resources independently at each hierarchical level in the event of a hardware/software resource failure. As depicted, the safety management unit 101 includes a resource database unit 110, a state management unit 120, and a resource management unit 130.

In the resource management unit 130, there is provided a platform health management module 131 and a partition and execution management module 136. The platform health management module 131 is a software entity that updates the health and performance monitoring results of the running processes executed by the partition and execution management module 136 into the resource database unit 110. The platform health management module 131 is also responsible for reporting any failures detected during monitoring to the state management unit 120. To this end, the platform health management module 131 is configured to monitor the hardware and software resources used by each application/process with the HW/SW monitoring module 132. The platform health management module 131 also monitors the process performance of resources, state/context, and other process performance indicators of the platform with the performance monitoring module 133. The platform health management module 131 also supervises the resources (e.g., alive, deadline, logical) with the supervision module 134. Based on the assessment of the platform health management module 131, the resource management unit 130 updates the resource database unit 110 accordingly by sending a HEALTH INFO signal to the dynamic database 112 and/or sending a MARK FAULTY RESOURCE signals to the resource database 110.

The partition and execution management module 136 is a software entity that starts process execution based on the current state (START EXECUTION BASED ON CURRENT STATE) provided by the state management unit 120. It also manages the execution states of these processes, and sends a message 135 to the platform health management module 131 to enable monitoring (e.g., hardware, software, performance monitors) and/or to provide updates on execution details. Additionally, the partition and execution management module 136 is responsible to perform a reconfiguration process in response to a RECONFIG STRATEGY request by the state management unit 120, and to also provide the reconfiguration status on failure reaction or normal execution based on current state transition (RECONFIG/EXECUTION STATUS). To this end, the partition and execution management module 136 includes a start/stop process module 137 that is responsible for starting and stopping an application/process. In case of a detected fault or failure, STOP message is provided by state management unit 120 to start/stop process module 137, which will stop the faulty process, helps in isolating the fault and prevent the fault from propagation. Also, the partition and execution management module 136 is configured with an initiate reconfiguration module 138 to execute the selected policy (reconfiguration/reallocation). The partition and execution management module 136 is also configured with an execution state management module 139 which is configured to manage the execution states and ensures freedom from interference between applications with necessary partition protection.

In the resource database unit 110, there is provided a static database 111 and a dynamic resource database 112 and a ranking database 113 for the functional component 110. In selected embodiments, the general functionality of the static database 111 corresponds functionally to the static databases 21, 24 shown in Figure 2, and may contains the fixed application list and their related parameters (e.g., ASIL Level, performance needs, timing requirements, reallocation policy). In addition, general functionality of the dynamic resource database 112 corresponds functionally to the dynamic health performance database 25 shown in Figure 2, and may collect and maintain parameter updates (e.g., hardware partition execution load, execution status of each application assigned to run on each hardware partition, allocated and free hardware resources, health status and the performance of each allocated hardware resource, etc.). In addition, general functionality of the ranking database 113 corresponds functionally to the dynamic ranking database 26 shown in Figure 2, and may contain, for each application allowed to be reallocated by the policy, a database containing a sorted list of HW partitions/resources on which a reallocation may be attempted. As disclosed herein, the ranking database 113 in resource database unit 110 may be modified only in response to requests by the safety management related entities.

In the state management unit 120, there is provided a process state module 121, a policy management module 122, and a failure reaction module 123 which are connected and configured to manage the state of the functional component 100 based on the current operating state and any dynamic external inputs (DYNAMIC EXTERNAL INPUTS), a list of applications/processes (APP LIST), any dynamic input from a next level safety management unit (NEXT LEVEL INPUT) and/or a valid policy configuration input (POLICY CONFIGURATION).

In particular, the process state module 121 is a software entity that actively responds to any received external event by triggering the execution of the next valid state. In selected embodiments, the process state module 121 initializes and updates the resource database unit 110, determines the current and next valid state, and triggers the resource management unit 130 to start execution of the current state by sending the "start execution based on current state" instruction.

In addition, the policy management module 122 is a software entity that is configured to update the policy based on a valid policy configuration input. In selected embodiments, the policy management module 122 collects and processes the application list and their parameters at their respective level, the external environment inputs (e.g., driving context, traffic context, V2X information), and the inputs from the higher and lower-level SMUs if present. In response to these inputs, the policy management module 122 creates and updates the valid and applicable policy in that given context. In response to a change in state by the process state module 121 and/or policy by policy management module 122, the ranking of the hardware entities in the ranking database 113 may be updated by state management unit 120.

In addition, the failure reaction module 123 is a software entity that is configured to retrieve the dynamic ranking information retrieved from the ranking database 113 and the current policy configuration provided by the policy management module 112. In response to any failure report generated by the resource management unit, the failure reaction module 123 does the failure handling by selecting and providing the reconfiguration strategy to the partition and execution management module 136 with the best policy from the ranking database 113. As disclosed herein, the failure reaction module 123 response to a failure report by stopping the execution of the software components and isolates the impact of the failure (if not already done by a hardware -triggered reaction). If allowed by policy to search for an alternative hardware entity/resource set, the state management unit 120 determines if a state transition is needed based on the chosen new hardware entity/ resource set and completes the failure handling. However, if the failure reaction module 123 cannot identify a reallocation hardware entity, the state management unit 120 escalate the fault to the safety management unity at the next (higher) hierarchy level.

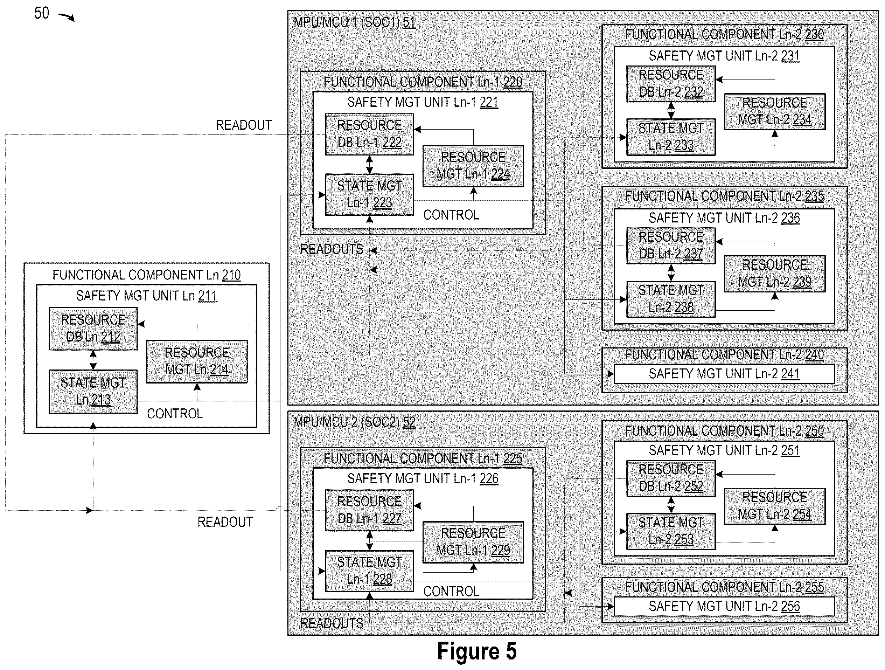

For an improved understanding of selected embodiments of the present disclosure, reference is now made to Figure 5 which depicts a schematic block diagram of a hierarchical fault collection, monitoring, and handling system 50 having a plurality of functional components 210, 220, 225, 230, 235, 240, 250, 255 and a corresponding plurality of safety management units 211, 221, 226, 231, 236, 241, 251, 256 connected in a hierarchical architecture to form an escalation tree configuration for reallocating resources.

As will be appreciated, a "functional component" can refer to different components and functions at each hierarchy level. For example, a functional component can refer to major car functions, like braking, power train, steering, etc. In the depicted system 50, the central or highest functional component Ln 210 in a vehicle may be the Vehicle Control Unit. At lower levels, a functional component could refer to sub-component/functions of each car functions. For example, the MPU/MCU 2 52 can be the overall powertrain function, the functional component Ln-1 225 can be the inverter sub-component, the functional component Ln-2 250 can be the speed processing sub-component, and the functional component Ln-2 255 can be the battery management system sub-component. In the overall powertrain functional component, if Ln-1 225 cannot handle a fault, the functional component Ln-1 225 will escalate to the Vehicle Control Unit functional component Ln 210.

As depicted, each of the functional components 210, 220, 225, 230, 235, 240, 250, 255 has a general functionality and design that corresponds functionally to the functional component 100 shown in Figure 4. In addition, each of the safety management units 211, 221, 226, 231, 236, 241, 251, 256 has a general functionality and design that corresponds functionally to the safety management unit 101 shown in Figure 4. However, in the depicted hierarchical architecture, different instances of the SMU are implemented on different levels (e.g., Ln, Ln-1, Ln-2). For example, the SMU 211 at level Ln includes a resource database unit Ln 212, state management unit Ln 213, and a resource management unit Ln 214 which corresponds, respectively, to the resource database unit 110, state management unit 120, and resource management unit 130 shown in Figure 4. In similar fashion, the SMUs 221, 226 at level Ln-1 each include resource database units Ln-1 222, 227, state management units Ln-1 223, 228, and resource management units Ln-1 224, 229 which correspond, respectively, to the resource database unit 110, state management unit 120, and resource management unit 130 shown in Figure 4. Likewise, the SMUs 231, 236, 241, 251, 256 at level Ln-2 each include resource database units Ln-2 232, 237, 252, state management units Ln-2 233, 238, 253, and resource management units Ln-2 234, 239, 254 which correspond, respectively, to the resource database unit 110, state management unit 120, and resource management unit 130 shown in Figure 4.

In the context of failure handling, the appropriate SMU on each level analyses, within its hierarchical scope, the state of the system and the reported failures, handles the recovery state, and provides the required information to the next level. Alternatively, each SMU escalates the failure directly to the next (higher) level in case the SMU cannot handle the recovery state with its own resources. In particular, the first level SMU Ln 211 controls the lower second level SMUs Ln-1 221, 226 by providing to the second level SMUs Ln-1 221, 226 the software component (SWC) list, including their parameters, assigned HW resources required by the SWC, and external and internal "environment" changes which may lead to a change of valid policy. In selected embodiments, each higher level SMU (e.g., 221) may control the lower level SMUs (e.g., 231, 236, 241) by having the state management unit (e.g., 223) in the higher level SMU 221 send CONTROL information to the state management unit(s) 233, 238 in the lower level SMUs 231, 236, 241. A similar process for controlling the lower level SMUs is shown in Figure 5 with the CONTROL signal paths. The first level SMU Ln 211 also coordinates the data flow and data exchange between the second level SMUs Ln-1 221, 226 or between a second level SMU Ln-1 and higher levels, if necessary. The first level SMU Ln 211 receives and processes the status information from the controlled lower-level SMUs, and also reads out periodically the lower level resource databases Ln-1 222, 227 to keep track of the Ln-1 status. For example, the state management unit (e.g., 223) at a higher level SMU 221 can directly read information from the resource databases 232, 237 in the lower level SMUs 231, 236, as shown with the READOUT signal path. Alternatively, there may be a predetermined protocol to provide data from each resource database Ln-1 (e.g., 222, 227) to the state management unit Ln 213 (e.g., on request, periodically, on a predefined state change). A similar process for reading out from lower level resource databases is shown in Figure 5 with the READOUT signal paths.

At each SMU instance, the resource database contains ranking information to enable dynamic reconfiguration of hardware and software resources at the level of the SMU instance. If a decision cannot be taken at the lowest hierarchy level (e.g., Ln-2) where the fault occurred, it will be escalated to the next higher level (e.g., Ln-1). Conversely, the SMU instance at a higher level Ln can control the SMUs at the next lower level Ln-1. In addition, the SMU instance at level Ln can indirectly influence the resource database at the next lower level Ln-1 in two ways. First, if there is a failure handling at a higher level Ln, the SMU Ln 211 would instruct the SMU Ln-1 221 for re-configuration, where the SMU Ln-1 221 would re-configure and update its resource database 222 accordingly. Second, any vehicle state/external inputs received at the SMU instance at level Ln would propagate from higher level to the lower levels (Ln to Ln-1) which could require update to resource database(s) at the respective levels.

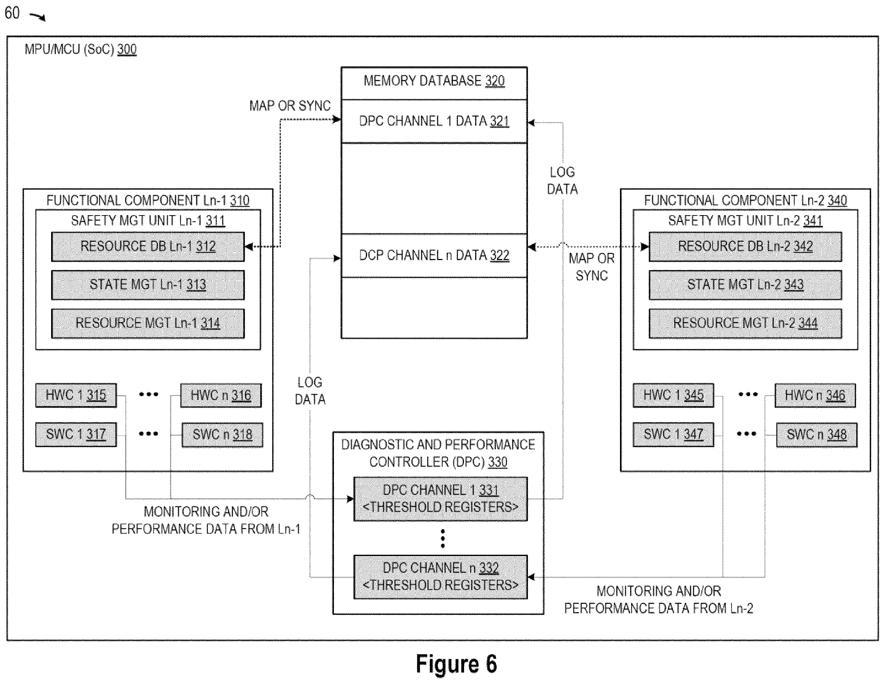

To provide additional details for an improved understanding of selected embodiments of the present disclosure, reference is now made to Figure 6 which depicts a schematic block diagram 60 of a diagnostic and performance controller (DPC) 330 and a memory database 320 connected between a first level functional component Ln-1 310 and a second, lower level functional component Ln-2 340 for populating the memory database 320. In operation, the DPC 330 helps the platform health management module 131 in Figure 4 with collecting and monitoring health, performance data, and any other diagnostic runtime data. As depicted, each of the functional components 310, 340 has a general functionality and design that corresponds functionally to the functional component 100 shown in Figure 4. In particular, the first level functional component Ln-1 310 includes a safety management unit Ln-1 311 that has a resource database unit Ln-1 312, state management unit Ln-1 313, and resource management unit Ln-1 314 that are connected and configured in the same way as the resource database unit 110, state management unit 120, and resource management unit 130 shown in Figure 4. The first level functional component Ln-1 310 also includes a plurality of n hardware components (HWC) 315-316 and a plurality of n software components (SWC) 317-318. In addition, the second, lower level functional component Ln-2 340 includes a safety management unit Ln-2 341 that has a resource database unit Ln-2 342, state management unit Ln-2 343, and resource management unit Ln-2 344 that are connected and configured in the same way as the resource database unit 110, state management unit 120, and resource management unit 130 shown in Figure 4. The second, lower level functional component Ln-2 340 also includes a plurality of n hardware components (HWC) 345-346 and a plurality of n software components (SWC) 347-348.

In order to populate the memory database 320, the DPC 330 is provided as a dedicated hardware controller which is connected to collect, at each resource hierarch level, monitoring and/or performance data signals from the hardware components 315-316, 345-346 and software components 317-318, 347-348. To this end, the DPC 330 includes a plurality of DPC channels 331-332, each of which is associated with a hardware and/or software component for a particular isolated partition and which has a dedicated memory region in the memory database 320. The respective channels 331-332 of the DPC 330 may be isolated with help of resource partition controller (like MPU). In the depicted DPC 330, a first DPC channel 1 331 is associated with the first hardware component HWC 1 315 at the functional component Ln-1 310 and has a dedicated memory region 321 for the DPC channel 1 data. Similarly, the nth DPC channel n 332 is associated with an nth software component SWC n 348 at the functional component Ln-2 340 and has a dedicated memory region 322 for the DPC channel n data, and so on. Each DCP channel memory region can be linked to the next channel memory region, such as by using a Next Channel Pointer. In this way the DPC channel memory regions can be daisy-chained based on hierarchy like L3->L2->L1 so that the highest level can read the next lower level data and so on. In the event of fault handling escalation, this enables a higher level (e.g., L2) to access related resource databases in the next lower level (e.g., , L1) if required through the chain.

In selected embodiments, the hardware and software components 315-318, 345-348 are connected to provide monitoring and/or performance data signals to threshold registers of respective DPC channels 331-332 in the DPC 330. In embodiments where the DPC channels 331-332 are provided with a threshold, once the monitoring and/or performance data crosses or meets a specified threshold for the channel, the data is then logged into the memory database 320 at a dedicated memory region for that channel. With the DPC channels 331-332 connected to the hardware and software components 315-318, 345-348, the depicted DPC 330 is able to provide the memory database 320 with health data for required HW IP blocks or components that are configured/enabled to send health diagnostics to the DPC 330. In addition, the DPC 330 is able to receive performance indicator data (e.g., idle time, peak time, etc.) from enabled HW and/or SW components, and to send performance data to the memory database 320 if the performance data is below, above, crosses, or matches a specified threshold for the channel.

In selected embodiments, each hardware component (e.g., 315) may be connected and configured to provide the necessary monitoring and/or performance data to the DPC 330 where the hardware component can be monitored at the desired granularity it supports (e.g., at channel level of DMA/SPI/UART, Lockstep/Split-lock core etc.). In selected embodiments, the platform health management 131 may initialize the designated DPC channels and configure the required hardware and/or software components to provide health and performance-related data to the DPC 330. Each monitored hardware/software component will have a unique identifier and type. Each hardware/software component "type" will have the same content of diagnostic data that is captured. In selected embodiments, the DPC 330 can perform predictive maintenance on the performance and health data of the monitored hardware/software component, and can also manipulate and log the relevant/equivalent data.

A method, system, apparatus, and architecture are provided for reacting to resource faults by deploying safety management unit (SMU) instances at a plurality of functional components, where each SMU instance is program code configured to monitor a first set of one or more resources assigned to run a first application; detect a fault at the first set of one or more resources; identify a second set of one or more resources for reallocation to the first application using a ranked listing of candidate resource sets, where each candidate resource set is capable of running the first application; and assign the second set of one or more resources to run the first application, where the ranked listing of candidate resource sets is dynamically updated based on runtime performance and health measures of resources in the candidate resource set.

As will be appreciated, the dynamic resource reallocation scheme disclosed herein poses certain challenges for each SMU instance to properly handle on its hierarchical level. For example, faulty components must be gracefully disabled, and dataflow to and from the faulty component has to be stopped. In addition, the SMU must create a new HW resource set, and for a processing task, the code image has to be made available to the new HW resource set. When possible, last valid execution contexts and/or valid states may be saved and used to restart the application from that known point. In addition, the safety integrity level of the new HW/SW resource pair set, along with required performance and timing application requirements, have to be fulfilled. And to ensure that the affected application can run without any issues, any dynamic resource reconfiguration between two different physical components requires the existence of physical connection between the new/reallocated component and the external components (e.g., input/output data from/to a certain sensors/actuator sets). The available physical connection needs to be enabled as a part of the reconfiguration process. The reconfiguration process of each of the above mentioned challenges will need some reconfiguration time, and in some occasions, there may be an overlap in execution of a function - (parallel execution), but at the end, the total time required from the time when a fault is reported until the application is re-allocated and re-started needs to be compliant with the application (safety) time constraints (e.g., Fault Tolerant Time Interval).

Given the variety and complexity of SoC subsystem partitioning possibilities, newer SoC architectures pose challenges for fault handling while simultaneously supporting the demand for higher availability of the control functions under presence of faults. To address these challenges, selected embodiments of the present disclosure introduce a single softwarebased safety management unit (SMU) entity that is running on a core to monitor HW and SW resources assigned to partition/virtual machine. Instead of installing the SMU entity at each HW IP component, the SMU entity allocates each HW IP component to a partition/VM. In Figure 5, this deployment is conceptually illustrated with each functional component including an SMU instance, and in Figure 6 with each functional component associated to one or more hardware and software components to provide a scalable and flexible fault handling architecture that can be easily modified and scaled based on the particular SoC implementation.

By now it should be appreciated that there has been provided a method, architecture, circuit, and system-on-chip for monitoring, analyzing, and reacting to resource faults by dynamically reallocating resources to safety critical tasks. In the disclosed SoC system, a plurality of functional components are provided which include a first upper level functional component and one or more second, lower level functional components connected together on a shared semiconductor substrate. In addition, the disclosed SoC system includes a plurality of safety management unit (SMU) instances deployed with at least one SMU instance deployed at each functional component. In selected embodiments, each SMU instance includes a static database which stores, for each application in a plurality of applications, a fixed listing of the safety properties and resources; a dynamic health and performance database which stores, for each hardware partition set of a plurality of hardware partition sets, a listing of the performance and health measurements which are dynamically captured during runtime; and a dynamic ranking database which stores, for each application in the plurality of applications, a ranked listing of hardware partition sets which are dynamically ranked during runtime. In selected embodiments, the plurality of functional components are connected in a fault escalation tree with each SMU instance deployed at the one or more second, lower level functional components having an escalation output connected to an escalation input of an escalation SMU instance deployed at the first upper level functional component. Each deployed SMU instance includes program code configured to monitor a first set of one or more resources assigned to run a first application. The SMU instance program code is also configured to detect a fault at the first set of one or more resources. In addition, the SMU instance program code is configured to identify a second set of one or more resources for reallocation to the first application using a ranked listing of candidate resource sets, where each candidate resource set is capable of running the first application. The SMU instance program code is also configured to assign the second set of one or more resources to run the first application. As disclosed, the ranked listing of candidate resource sets is dynamically updated based on runtime performance and health measures of resources in the candidate resource set. In selected embodiments, the ranked listing of candidate resource sets include a default hardware partition set that is initially assigned to run the first application and a ranked plurality of one or more additional hardware partition sets that are available for reallocation to run the first application, where each of the default hardware partition set and the one or more additional hardware partition sets includes a corresponding list of hardware and software resources that are capable of running the first application. In selected embodiments, each SMU instance is configured to generate the ranked listing of candidate resource sets from (1) a statically defined list of applications which are enabled for reallocation of resources, (2) a statically defined list of properties for each application in the statically defined list of applications, and (3) a statically defined list of resources which can run each application in the statically defined list of applications. In such embodiments, the each SMU instance may be further configured to generate the ranked listing of candidate resource sets from (1) a dynamically updated list of currently used resources and available resources with corresponding health information which is provided by the SMU instance at runtime, (2) a dynamically updated list of performance indicators for the resources in the candidate resource set which is provided by the SMU instance at runtime, and (3) dynamically updated runtime data for the resources in the candidate resource set which is provided by the SMU instance at runtime. In selected embodiments, the SoC system may also include a diagnostic and performance controller which is connected to collect performance and health measures from hardware and software resources in the plurality of functional components for storage in a plurality of channel threshold registers.

In another form, there is provided a fault collection and reaction method, architecture, circuit, and apparatus for a system-on-chip (SoC) which includes plurality of functional components with a plurality of safety management unit (SMU) instances deployed with at least one SMU instance at each functional component. In the disclosed SoC method, a first SMU instance located at a first functional component is configured to perform the step of monitoring a first set of one or more resources assigned to run a first application at the first functional component. In addition, the first SMU instance is configured to perform the step of generating a first failure report in response to detecting a first fault at a hardware or software resource used by the first application. The first SMU instance is also configured to perform the step of identifying one or more reallocation resources from a ranked listing of candidate resource sets for the first application, where each candidate resource set is capable of running the first application. In addition, the first SMU instance is configured to perform the step of reconfiguring the first application to use the one or more reallocation resources. In the disclosed SoC method, the ranked listing of candidate resource sets is dynamically updated based on runtime performance and health measures of hardware and software resources in the ranked listing of candidate resource sets for the first application. In selected embodiments, the ranked listing of candidate resource sets includes a default hardware partition set that is initially assigned to run the first application and a ranked plurality of one or more additional hardware partition sets that are available for reallocation to run the first application, where each of the default hardware partition set and the one or more additional hardware partition sets includes a corresponding list of hardware and software resources that are capable of running the first application. In selected embodiments of the SoC method, the plurality of functional components are connected in a fault escalation tree which includes a first upper level functional component and one or more second, lower level functional components, with each SMU instance deployed at the one or more second, lower level functional components having an escalation output connected to an escalation input of an escalation SMU instance deployed at the first upper level functional component. In other selected embodiments of the SoC method, the first SMU instance is further configured to perform the step of generating the ranked listing of candidate resource sets from (1) a statically defined list of applications which are enabled for reallocation of resources, (2) a statically defined list of properties for each application in the statically defined list of applications, and (3) a statically defined list of resources which can run each application in the statically defined list of applications. In such embodiments, the where the first SMU instance is further configured to perform the step of generating the ranked listing of candidate resource sets from (1) a dynamically updated list of currently used resources and available resources with corresponding health information which is provided by the SMU instance at runtime, and (2) a dynamically updated list of performance indicators for the resources in the candidate resource set which is provided by the SMU instance at runtime. In other selected embodiments of the SoC method, the first SMU instance is further configured to perform the step of collecting performance and health measures from resources in the plurality of functional components for storage in a plurality of channel threshold registers. In other selected embodiments of the SoC method, the first SMU instance is further configured to perform the steps of storing, in a static database, a fixed listing of the safety properties, hardware and software resources for each application in a plurality of applications; storing, in a dynamic health and performance database, a listing of the performance and health measurements for each hardware partition set of a plurality of hardware partition sets, where the listing of the performance and health measurements are dynamically captured during runtime; and storing, in a dynamic ranking database, a ranked listing of hardware partition sets for each application in the plurality of applications, where the ranked listing of hardware partition sets is dynamically ranked during runtime.

In yet another form, there is provided a fault collection and handling system for a system-on-chip. The disclosed fault collection and handling system includes a plurality of functional components including a first upper level functional component and one or more second, lower level functional components connected together in a fault escalation tree. In addition, disclosed fault collection and handling system includes a first plurality of safety management unit (SMU) instances deployed with at least one SMU instance at each of the plurality of functional components. As disclosed, each SMU instance is configured to monitor a first set of one or more resources assigned to run a first application. In addition, each SMU instance is configured to generate a first failure report in response to detecting a first fault at a hardware or software resource used by the first application. Each SMU instance is also configured to identify one or more reallocation resources from a ranked listing of candidate resource sets which are each capable of running the first application. In addition, each SMU instance is configured to reconfigure the first application to use the one or more reallocation resources, in the disclosed fault collection and handling system, the ranked listing of candidate resource sets is dynamically updated based on runtime performance and health measures of hardware and software resources in the ranked listing of candidate resource sets for the first application. In selected embodiments of the fault collection and handling system, each of the first plurality of SMU instances includes one or more fault inputs and a fault output and is configured to monitor one or more fault input signals at the one or more fault inputs, to generate a local control signal for reconfiguring the first application to use the one or more reallocation resources if the first fault can be addressed by the one or more reallocation resources controlled by the SMU instance, and to generate a fault output signal to escalate any unresolved fault on the fault output. In other selected embodiments of the fault collection and handling system, each SMU instance is configured to generate the ranked listing of candidate resource sets from (1) a statically defined list of applications which are enabled for reallocation of resources, (2) a statically defined list of properties for each application in the statically defined list of applications, (3) a statically defined list of resources which can run each application in the statically defined list of applications, (4) a dynamically updated list of currently used resources and available resources with corresponding health information which is provided by the SMU instance at runtime, (5) a dynamically updated list of performance indicators for the resources in the candidate resource set which is provided by the SMU instance at runtime, and (6) dynamically updated runtime data for the resources in the candidate resource set which is provided by the SMU instance at runtime. In other selected embodiments of the fault collection and handling system, the ranked listing of candidate resource sets includes a default hardware partition set that is initially assigned to run the first application and a ranked plurality of one or more additional hardware partition sets that are available for reallocation to run the first application, where each of the default hardware partition set and the one or more additional hardware partition sets include a corresponding list of hardware and software resources that are capable of running the first application. In selected embodiments, the fault collection and handling system also includes a diagnostic and performance controller which is connected to collect performance and health measures from resources in the plurality of functional components for storage in a plurality of channel threshold registers. In other selected embodiments of the fault collection and handling system, each SMU instance includes a static database (which stores, for each application in a plurality of applications, a fixed listing of the safety properties, hardware and software resources), a dynamic health and performance database (which stores, for each hardware partition set of a plurality of hardware partition sets, a listing of the performance and health measurements which are dynamically captured during runtime), and a dynamic ranking database (which stores, for each application in the plurality of applications, a ranked listing of hardware partition sets which are dynamically ranked during runtime).

The block diagrams in the figures illustrate the architecture, functionality, and operation of possible implementations of systems, methods and computer program products according to various embodiments of the present invention. In this regard, each block in the block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

While particular embodiments of the present invention have been shown and described, it will be obvious to those skilled in the art that, based upon the teachings herein, that changes and modifications may be made without departing from this invention and its broader aspects. Therefore, the appended claims are to encompass within their scope all such changes and modifications as are within the true spirit and scope of this invention. Furthermore, it is to be understood that the invention is solely defined by the appended claims. It will be understood by those with skill in the art that if a specific number of an introduced claim element is intended, such intent will be explicitly recited in the claim, and in the absence of such recitation no such limitation is present. For non-limiting example, as an aid to understanding, the following appended claims contain usage of the introductory phrases "at least one" and "one or more" to introduce claim elements. However, the use of such phrases should not be construed to imply that the introduction of a claim element by the indefinite articles "a" or "an" limits any particular claim containing such introduced claim element to inventions containing only one such element, even when the same claim includes the introductory phrases "one or more" or "at least one" and indefinite articles such as "a" or "an"; the same holds true for the use in the claims of definite articles. As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages.

Aspects of the present invention are described hereinabove with reference to block diagrams of methods, apparatus (systems) and computer program products according to embodiments of the invention. It will be understood that each block of the block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. In certain implementations, a system on a chip or SOC may be implemented.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Although the described exemplary embodiments disclosed herein focus on example fault collection and handling system for identifying replacement resources to perform dynamic reconfiguration in embedded systems in case of failure, the present invention is not necessarily limited to the example embodiments illustrate herein. For example, various embodiments of using sound sensors may be applied in any suitable fault handling systems, and not just automotive vehicle systems, and may use additional or fewer circuit components than those specifically set forth. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A System-on-Chip (SoC) comprising:
a plurality of functional components comprising a first upper level functional component and one or more second, lower level functional components connected together on a shared semiconductor substrate; and
a plurality of safety management unit (SMU) instances deployed with at least one SMU instance deployed at each functional component, where each SMU instance comprises program code configured to:
monitor a first set of one or more resources assigned to run a first application,
detect a fault at the first set of one or more resources,
identify a second set of one or more resources for reallocation to the first application using a ranked listing of candidate resource sets, where each candidate resource set is capable of running the first application, and
assign the second set of one or more resources to run the first application;
where the ranked listing of candidate resource sets is dynamically updated based on runtime performance and health measures of resources in the candidate resource set.

2. The SoC of claim 1, where the plurality of functional components are connected in a fault escalation tree with each SMU instance deployed at the one or more second, lower level functional components having an escalation output connected to an escalation input of an escalation SMU instance deployed at the first upper level functional component.

3. The SoC of any preceding claim, where each SMU instance is configured to generate the ranked listing of candidate resource sets from (1) a statically defined list of applications which are enabled for reallocation of resources, (2) a statically defined list of properties for each application in the statically defined list of applications, and (3) a statically defined list of resources which can run each application in the statically defined list of applications.

4. The SoC of claim 3, where each SMU instance is further configured to generate the ranked listing of candidate resource sets from (1) a dynamically updated list of currently used resources and available resources with corresponding health information which is provided by the SMU instance at runtime, and (2) a dynamically updated list of performance indicators for the resources in the candidate resource set which is provided by the SMU instance at runtime.

5. The SoC of any preceding claim, where the ranked listing of candidate resource sets comprises a default hardware partition set that is initially assigned to run the first application and a ranked plurality of one or more additional hardware partition sets that are available for reallocation to run the first application, where each of the default hardware partition set and the one or more additional hardware partition sets comprises a corresponding list of hardware and software resources that are capable of running the first application.

6. The SoC of any preceding claim, further comprising a diagnostic and performance controller which is connected to collect performance and health measures from resources in the plurality of functional components for storage in a plurality of channel threshold registers.

7. The SoC of any preceding claim, where each SMU instance comprises:
a static database which stores, for each application in a plurality of applications, a fixed listing of the safety properties, hardware and software resources;
a dynamic health and performance database which stores, for each hardware partition set of a plurality of hardware partition sets, a listing of the performance and health measurements which are dynamically captured during runtime; and
a dynamic ranking database which stores, for each application in the plurality of applications, a ranked listing of hardware partition sets which are dynamically ranked during runtime.

8. A fault collection and reaction method for a system-on-chip (SoC) comprising a plurality of functional components with a plurality of safety management unit (SMU) instances deployed with at least one SMU instance at each functional component, where a first SMU instance located at a first functional component is configured to perform the steps of:
monitoring a first set of one or more resources assigned to run a first application at the first functional component;
generating a first failure report in response to detecting a first fault at a hardware or software resource used by the first application;
identifying one or more reallocation resources from a ranked listing of candidate resource sets for the first application, where each candidate resource set is capable of running the first application; and
reconfiguring the first application to use the one or more reallocation resources;
where the ranked listing of candidate resource sets is dynamically updated based on runtime performance and health measures of hardware and software resources in the ranked listing of candidate resource sets for the first application.

9. The fault collection and reaction method of claim 8, where the plurality of functional components are connected in a fault escalation tree comprising a first upper level functional component and one or more second, lower level functional components, with each SMU instance deployed at the one or more second, lower level functional components having an escalation output connected to an escalation input of an escalation SMU instance deployed at the first upper level functional component.

10. The fault collection and reaction method of claim 8 or 9, where the first SMU instance is further configured to perform the step of:
generating the ranked listing of candidate resource sets from (1) a statically defined list of applications which are enabled for reallocation of resources, (2) a statically defined list of properties for each application in the statically defined list of applications, and (3) a statically defined list of resources which can run each application in the statically defined list of applications.

11. The fault collection and reaction method of claim 10, where the first SMU instance is further configured to perform the step of:
generating the ranked listing of candidate resource sets from (1) a dynamically updated list of currently used resources and available resources with corresponding health information which is provided by the SMU instance at runtime, (2) a dynamically updated list of performance indicators for the resources in the candidate resource set which is provided by the SMU instance at runtime, and (3) dynamically updated runtime data for the resources in the candidate resource set which is provided by the SMU instance at runtime.

12. The fault collection and reaction method of any of claims 8 to 11, where the ranked listing of candidate resource sets comprises a default hardware partition set that is initially assigned to run the first application and a ranked plurality of one or more additional hardware partition sets that are available for reallocation to run the first application, where each of the default hardware partition set and the one or more additional hardware partition sets comprises a corresponding list of hardware and software resources that are capable of running the first application.

13. The fault collection and reaction method of any of claims 8 to 12, where the first SMU instance is further configured to perform the step of collecting performance and health measures from resources in the plurality of functional components for storage in a plurality of channel threshold registers.

14. The fault collection and reaction method of any of claims 8 to 13, where the first SMU instance is further configured to perform the steps of:
storing, in a static database, a fixed listing of the safety properties, hardware and software resources for each application in a plurality of applications;
storing, in a dynamic health and performance database, a listing of the performance and health measurements for each hardware partition set of a plurality of hardware partition sets, where the listing of the performance and health measurements are dynamically captured during runtime; and
storing, in a dynamic ranking database, a ranked listing of hardware partition sets for each application in the plurality of applications, where the ranked listing of hardware partition sets is dynamically ranked during runtime.
